# EUROPEAN PATENT APPLICATION

(11) **EP 4 844 525 A1**
(43) Date of publication of application: **25.11.2026**
(21) Application number: 24926317.9
(22) Date of filing: 26.02.2024
(51) Int. Cl.: G05D 109/30, G05D 1/43

(54) **METHOD FOR REALIZING POSITION KEEPING OF WATERBORNE VEHICLE ON BASIS OF SINGLE THRUSTER, AND RELATED DEVICE**

(71) Applicant: Guangdong Epropulsion Technology Limited, Dongguan, Guangdong 523808 (CN)
(72) Inventor: YAN, Weisheng, Dongguan, Guangdong 523808 (CN); TANUBRATA, Hans Ryan, Dongguan, Guangdong 523808 (CN); LIN, Zesheng, Dongguan, Guangdong 523808 (CN); WEIDI, Andreas, Dongguan, Guangdong 523808 (CN); TAO, Shizheng, Dongguan, Guangdong 523808 (CN); WAN, Xiaokang, Dongguan, Guangdong 523808 (CN)
(74) Representative: Michalski Hüttermann & Partner mbB
(86) International application number: PCT/CN2024/078609
(87) International publication number: WO 2025/179430

(57) **Abstract**

A method for maintaining a position of a water carrier (20) based on a single thruster, a storage medium, a thruster (10), and a movable waterborne device (100), the method includes: (S11) in response to a position maintenance instruction, setting a current position of the water carrier (20) as a target position; (S12) calculating a target thrust required by the thruster (10), where the target thrust is used to orient the bow or stern of the water carrier (20) toward the target position and drive the water carrier (20) to move forward or backward so as to maintain the water carrier (20) at the target position; and (S13) controlling the thruster (10) to generate the target thrust. The present application enables automatic position maintenance of the water carrier (20) using only a single thruster (10), such that the movable waterborne device (100) can also automatically maintain the position of the water carrier (20) when the water carrier (20) is equipped with only one thruster (10).

## Description

### TECHNICAL FIELD

The present application relates to the field of intelligent navigation technology, and in particular, to a method for maintaining the position of a water carrier based on a single thruster, and related devices.

### TECHNICAL BACKGROUND

The position maintenance function is designed to maintain a water carrier at a specific position. In the related art, a water carrier can be equipped with an automatic position maintenance function that does not require manual manipulation by a user. However, such an automatic position maintenance function needs to be implemented with two thrusters, and automatic position maintenance cannot be achieved when only a single thruster is available.

### SUMMARY

In a first aspect, the present application provides a method for maintaining the position of a water carrier based on a single thruster. The method comprises:
in response to a position maintenance instruction, setting a current position of the water carrier as a target position;
calculating a target thrust required by the thruster, where the target thrust is used to orient the bow or stern of the water carrier toward the target position and drive the water carrier to move forward or backward so as to keep the water carrier at the target position; and
controlling the thruster to generate the target thrust.

In a second aspect, the present application provides another method for maintaining the position of a water carrier based on a single thruster. The method includes:
in response to a position maintenance instruction, setting a current position of the water carrier as a target position;
acquiring subsequent positions of the water carrier;
calculating an angle error between each subsequent position and the target position;
determining a thrust direction of the target thrust required by the thruster based on the angle error; and
controlling the thruster to generate the target thrust directed along the thrust direction, so that the water carrier remains at the target position.

In a third aspect, the present application provides a computer-readable storage medium storing computer instructions thereon. When the computer instructions are executed by a processor, the processor implements the method according to the first aspect or the second aspect of the present application.

In a fourth aspect, the present application provides a thruster. The thruster includes a propulsion device and a processor. The processor is electrically connected to the propulsion device, and the processor is configured to execute the method according to the first aspect or the second aspect of the present application.

In a fifth aspect, the present application provides a movable waterborne device. The movable waterborne device includes a water carrier and the thruster according to the fourth aspect, and the thruster is mounted on the water carrier.

In the embodiments of the present application, after the position maintenance function is activated, a target thrust capable of orienting the bow or stern of the water carrier toward the target position and driving the water carrier to move forward or backward is calculated. The thruster is controlled to generate the target thrust, thereby keeping the water carrier at the target position. The present application can automatically realize position maintenance of the water carrier based on only a single thruster. Therefore, a movable waterborne device equipped with merely one thruster can also perform automatic position maintenance without manual manipulation by a user, which greatly facilitates user operation.

### BRIEF DESCRIPTION OF DRAWINGS

To illustrate the technical solutions in the embodiments of the present application, the accompanying drawings required for describing the embodiments are briefly introduced below. Obviously, the accompanying drawings described below merely show some embodiments of the present application, and a person of ordinary skill in the art may obtain other drawings based on these drawings without creative efforts.
FIG. 1 is a structural schematic diagram of a movable waterborne device according to some embodiments of the present application;
FIG. 2 is a structural schematic diagram of a trimming device connected to a fixture in a thruster according to some embodiments of the present application;
FIG. 3 is a module connection schematic diagram of a movable waterborne device according to some embodiments of the present application;
FIG. 4 is a module connection schematic diagram of a movable waterborne device according to another embodiment of the present application;
FIG. 5 is a coordinate system schematic diagram of a water carrier according to some embodiments of the present application;
FIG. 6 is a flow schematic diagram of a method for maintaining the position of a water carrier based on a single thruster according to some embodiments of the present application;
FIG. 7 is a principle schematic diagram illustrating a calculation mode for the position of a water carrier according to some embodiments of the present application;
FIG. 8 is a schematic diagram of a first axis according to some embodiments of the present application;
FIG. 9A and FIG. 9B are schematic diagrams of thrust directions of a target thrust according to some embodiments of the present application, respectively;
FIG. 10 is a principle schematic diagram illustrating a calculation mode for an angle error according to some embodiments of the present application;
FIG. 11A is a schematic diagram of steering positions of a thruster according to some embodiments of the present application;
FIG. 11B is a schematic diagram illustrating a relationship between an angle error and a steering stroke according to some embodiments of the present application;
FIG. 12A and FIG. 12B are schematic diagrams of movement modes of a water carrier according to some embodiments of the present application, respectively;
FIG. 13 is a schematic diagram illustrating a variation process of thrust output by a thruster according to some embodiments of the present application; and
FIG. 14 is a flow schematic diagram of another method for maintaining the position of a water carrier based on a single thruster according to some embodiments of the present application.

To illustrate the technical solutions of the embodiments of the present application, the accompanying drawings used for describing the embodiments are briefly introduced below. Obviously, the drawings described below merely illustrate partial embodiments of the present application, and a person of ordinary skill in the art can derive other drawings from these without creative labor.

### DETAILED DESCRIPTION

The technical solutions in the embodiments of the present application are described below with reference to the accompanying drawings of the present application. Obviously, the described embodiments are merely a part rather than all of the embodiments of the present application. All other embodiments obtained by a person of ordinary skill in the art based on the embodiments of the present application without creative efforts shall fall within the protection scope of the present application.

The exemplary embodiments are described in detail herein, with examples illustrated in the accompanying drawings. The following description referring to the accompanying drawings uses identical reference numerals to denote identical or similar elements throughout different drawings unless otherwise specified. The implementation manners described in the following exemplary embodiments do not represent all embodiments consistent with the present application. Instead, they are merely examples of devices and methods consistent with some aspects of the present application as recited in the appended claims.

The terms used in the present application are merely for describing specific embodiments and are not intended to limit the present application. The singular forms "a," "the," and "said" used in the present application and the appended claims are also intended to include plural forms unless the context clearly indicates otherwise. It should also be understood that the term "and/or" used herein refers to and includes any or all possible combinations of one or more associated listed items. Unless otherwise specified, directional terms such as "front portion," "rear portion," "lower portion" and/or "upper portion" are used merely for ease of description and are not limited to a single position or spatial orientation. Terms such as "connected" or "coupled" are not limited to physical or mechanical connections, and may include electrical connections, whether direct or indirect. The term "plurality" means at least two.

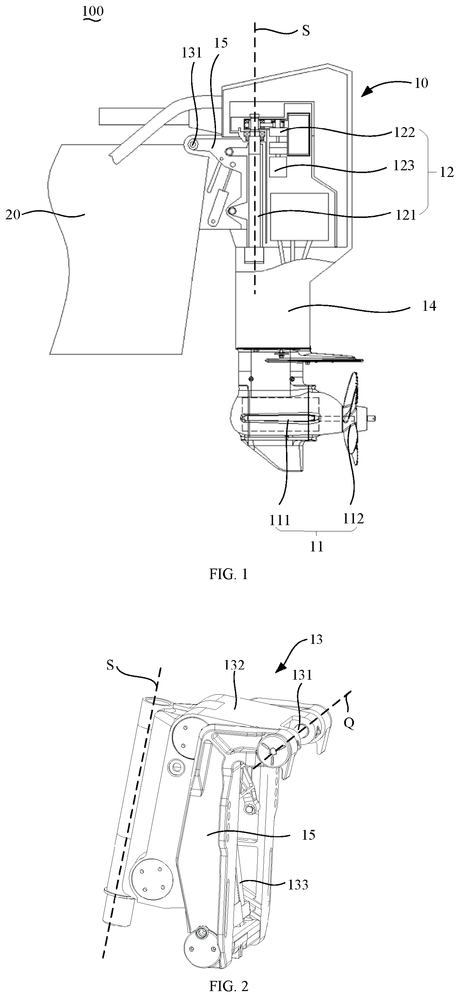

Reference is made to FIG. 1. The present application provides a movable waterborne device 100. The movable waterborne device 100 may be various waterborne vehicles such as commercial ships, passenger ships, yachts, fishing boats and sailing boats, or waterborne operation device including water inspection device, water treatment device and water environment monitoring device, which is not limited herein.

The movable waterborne device 100 includes a water carrier 20 and a thruster 10 mounted on the water carrier 20. The thruster 10 is a device capable of providing power in a water environment. The thruster 10 includes a steerable member that can rotate around a steering axis S (shown in FIG. 2). In one example, the steerable member may include a propulsion device 11 inside the thruster 10, and in this case, the thruster 10 may be an outboard motor, a rotatable pod thruster, a tow motor, or the like. In another example, the steerable member may include a rudder blade, and in this case, the thruster 10 includes a rudder blade and a propulsion device 11 independent of each other, such as an inboard motor used in combination with a rudder blade, where the rudder blade and the inboard motor are separate components. For example, when the thruster 10 is an outboard motor or a tow motor, the thruster 10 may be mounted at the bow, stern, side or other positions of the water carrier 20. For example, when the thruster 10 is device including a rudder blade and an inboard motor or a rotatable pod thruster 10, the thruster 10 may be mounted at the bottom or other positions of the water carrier 20.

Reference is made to FIG. 1 and FIG. 2, which illustrate an example where the thruster 10 is an outboard motor. The thruster 10 includes a fixture 15 and a main body. The fixture 15 is used to fix the main body to the water carrier 20, for example, fixing the main body to the stern of the water carrier 20. The main body includes a propulsion device 11, a steering device 12, a trimming device 13, and a housing 14. The propulsion device 11, the steering device 12, and the trimming device 13 are all connected to the housing 14.

The propulsion device 11 includes a propulsion motor 111 and a propeller 112. The propeller 112 is mounted on an output shaft of the propulsion motor 111. Rotation of the propulsion motor 111 drives the propeller 112 to rotate to output thrust. The propulsion motor 111 can output a first torque and a second torque in different directions. Switching between the first torque and the second torque can change the rotation direction of the propeller, so that the propeller can output thrust in two directions to push the water carrier 20 to move forward or backward.

The steering device 12 includes a steering shaft 121, a reduction assembly 122, and a steering motor 123 connected in sequence. The steering motor 123 drives the steering shaft 121 to rotate left and right relative to the housing 14 via the reduction assembly 122. Since the housing 14 is rotatably fitted to the steering shaft 121, and the propulsion device 11 is relatively fixed to the housing 14, when the steering motor 123 drives the steering shaft 121 to rotate relative to the housing 14 via the reduction assembly 122, the propulsion device 11 can rotate around the steering axis S, thereby changing the orientation of the propulsion device 11 and altering the direction of thrust output by the propulsion device 11, and further driving the water carrier 20 to turn. Furthermore, the steering device 12 may further include a steering angle sensor (not shown in the figure). The steering angle sensor may be used to detect a steering angle of the propulsion device 11.

The trimming device 13 includes a trimming shaft 131, a trimming bracket 132, and a trimming drive assembly 133. The trimming bracket 132 is rotatably connected to the fixture 15 via the trimming shaft 131, and the trimming drive assembly 133 is configured to drive the trimming bracket 132 to rotate relative to the fixture 15. Since the trimming bracket 132 is relatively fixed to the propulsion device 11 in the trimming direction, the trimming bracket 132 can drive the propulsion device 11 to rotate around a trimming axis Q to realize trimming of the propulsion device 11. Furthermore, the trimming device 13 may further include a trimming angle sensor (not shown in the figure). The trimming angle sensor may be used to detect a trimming angle of the propulsion device 11.

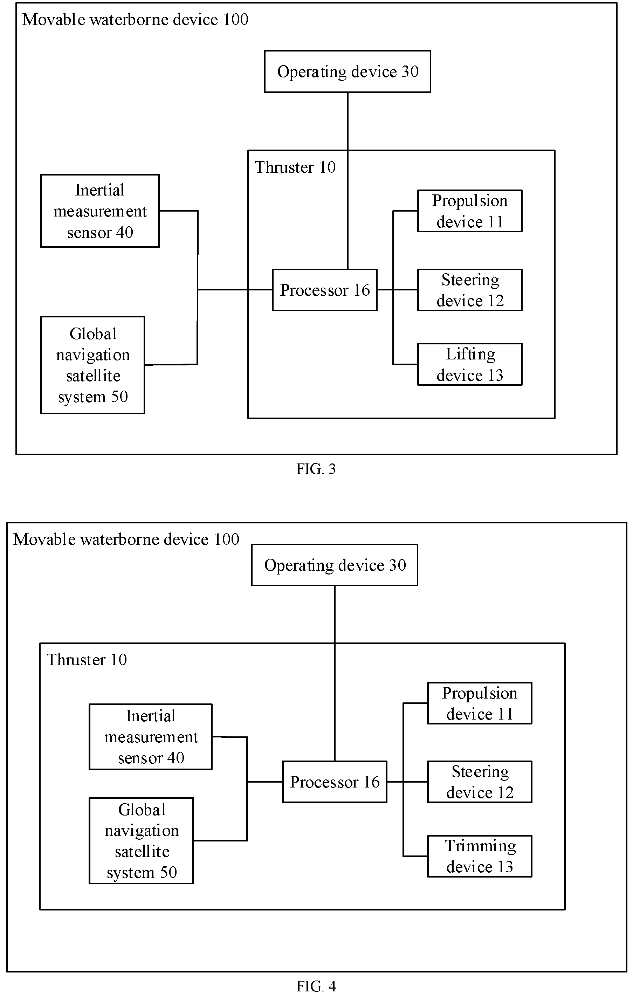

Reference is made to FIG. 3 and FIG. 4. The thruster 10 further includes a processor 16. The processor 16 is accommodated inside the housing 14. The processor 16 is electrically connected to the propulsion device 11, the steering device 12 and the trimming device 13. For example, the processor 16 may be electrically connected to the propulsion motor 111, the steering motor 123, the steering angle sensor, the trimming drive assembly 133 and the trimming angle sensor. The processor 16 can receive signals fed back by the propulsion motor 111, the steering motor 123, the steering angle sensor, the trimming drive assembly 133 and the trimming angle sensor, and can also output instructions to the propulsion device 11, the steering device 12 and the trimming device 13, so that the propulsion device 11, the steering device 12, and the trimming device 13 perform actions corresponding to the instructions.

With continued reference to FIG. 3 and FIG. 4, the movable waterborne device 100 may further include an operating device 30, an inertial measurement sensor 40 and a global navigation satellite system 50.

The operating device 30 is configured to receive user operations and send operating instructions corresponding to the user operations to the thruster 10. The operating instructions include, for example, a forward gear instruction, a reverse gear instruction, a steering instruction and the like. For example, the operating device 30 may be electrically connected to the processor 16 to send operating instructions to the processor 16. The operating device 30 may include a steering wheel, a tiller, a remote controller, a wireless joystick, a display screen, and the like.

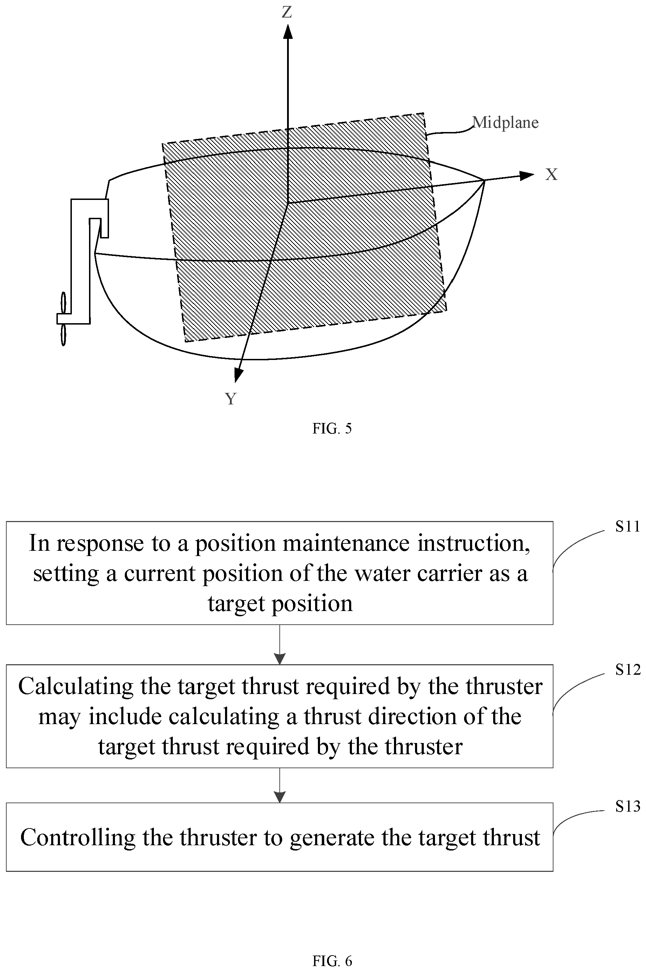

The inertial measurement sensor 40 may include a three-axis accelerometer, which can detect and output acceleration data. The inertial measurement sensor 40 may be electrically connected to the processor 16 to provide acceleration data to the processor 16. The acceleration data includes acceleration data of a roll axis, a pitch axis and a yaw axis, and the unit of acceleration is usually m/s². Linear velocity and moving distance of each axis can be obtained by integrating the acceleration of each axis. The three-axis coordinate system of the water carrier 20 is shown in FIG. 5. In the three-axis coordinate system of the water carrier 20, the X'-axis represents the roll axis, the Y'-axis represents the pitch axis, and the Z-axis represents the yaw axis. The midplane of the water carrier 20 is a plane perpendicular to the Y'-axis and passing through the X'-axis. The heading of the water carrier 20 may be understood as the positive direction of the X'-axis shown in FIG. 5, also referred to as the bow heading.

The global navigation satellite system 50 can detect and output position data. The global navigation satellite system 50 may be electrically connected to the processor 16 to provide position data to the processor 16. The global navigation satellite system 50 may be any one of the BeiDou Navigation Satellite System (BDS), Global Positioning System (GPS), Global Navigation Satellite System (GLONASS) and Galileo Navigation Satellite System (Galileo), which is not limited herein.

As shown in FIG. 3, the inertial measurement sensor 40 and the global navigation satellite system 50 may be directly disposed on the water carrier 20. In this case, the inertial measurement sensor 40 and the global navigation satellite system 50 are relatively fixed to the water carrier 20, and data output by the inertial measurement sensor 40 and the global navigation satellite system 50 are detection data for the water carrier 20. In this arrangement, detection data of the water carrier 20 can be directly obtained without conversion, which reduces calculation workload of the processor 16. As shown in FIG. 4, the inertial measurement sensor 40 and the global navigation satellite system 50 may be disposed inside the thruster. This arrangement can enrich functions of the thruster 10 and help improve integration of the thruster 10. Furthermore, for the case where the steerable member includes the propulsion device 11, the inertial measurement sensor 40 and the global navigation satellite system 50 may be disposed inside the housing 14 to facilitate electrical connection between the inertial measurement sensor 40, the global navigation satellite system 50 and the processor 16. Since the housing 14 is fixedly connected to the propulsion device 11, the inertial measurement sensor 40 and the global navigation satellite system 50 will move relative to the water carrier 20 as the propulsion device 11 rotates (steers or lifts), and data output by the inertial measurement sensor 40 and the global navigation satellite system 50 are detection data for the propulsion device 11. In this embodiment, data output by the inertial measurement sensor 40 may be converted to obtain detection data for the water carrier 20. For the case where the global navigation satellite system 50 is disposed inside the thruster 10, it can be understood that position data output by the global navigation satellite system 50 are data in a world coordinate system, and whether the global navigation satellite system 50 moves relative to the water carrier 20 as the propulsion device 11 rotates will not greatly affect the output position data. Therefore, only the distance difference between the position where the thruster 10 is disposed and a target point of the water carrier 20 (i.e., a point used to characterize the position of the water carrier 20) needs to be considered, and the processor 16 converts the position data of the thruster 10 into position data of the water carrier 20 based on the distance difference. Exemplary conversion modes are described below.

Based on the foregoing movable waterborne device 100, the present application further provides a method for maintaining the position of the water carrier 20 based on a single thruster 10. The method may be executed by the foregoing processor 16. Reference is made to FIG. 6. The method for maintaining the position of the water carrier 20 based on a single thruster 10 according to an embodiment of the present application includes the following steps.

Step S11: In response to a position maintenance instruction, take the current position of the water carrier 20 as a target position.

In Step S11, the position maintenance instruction is used to trigger the position maintenance function. The position maintenance function can be triggered in multiple manners. As one example, a user may trigger the position maintenance function by operating the operating device 30. For example, a position maintenance button is disposed on a remote controller; when the user presses the position maintenance button, the operating device 30 generates a position maintenance instruction and sends the position maintenance instruction to the processor 16 in the thruster 10. The processor 16 responds to the position maintenance instruction and starts executing position maintenance control. As another example, a position maintenance button may be disposed on the thruster 10, and the position maintenance button is electrically connected to the processor 16. After the user presses the position maintenance button, the processor 16 detects the user operation and correspondingly generates a position maintenance instruction, and the processor 16 responds to the position maintenance instruction and starts executing position maintenance control.

The target position may be the position where the water carrier 20 is located when the processor 16 receives the position maintenance instruction. The processor 16 may acquire current position data (i.e., position data at the moment when the position maintenance instruction is received) from the global navigation satellite system 50 to determine the current position of the water carrier 20 based on the position data. In the embodiment where the global navigation satellite system 50 is disposed on the water carrier 20, the processor 16 may directly obtain the current position of the water carrier 20 based on the position data output by the global navigation satellite system 50. In the embodiment where the global navigation satellite system 50 is disposed inside the thruster 10, the processor 16 may obtain the position of the thruster 10 based on the position data output by the global navigation satellite system 50, and determine the position of the water carrier 20 based on the position of the thruster 10 and the size of the water carrier 20.

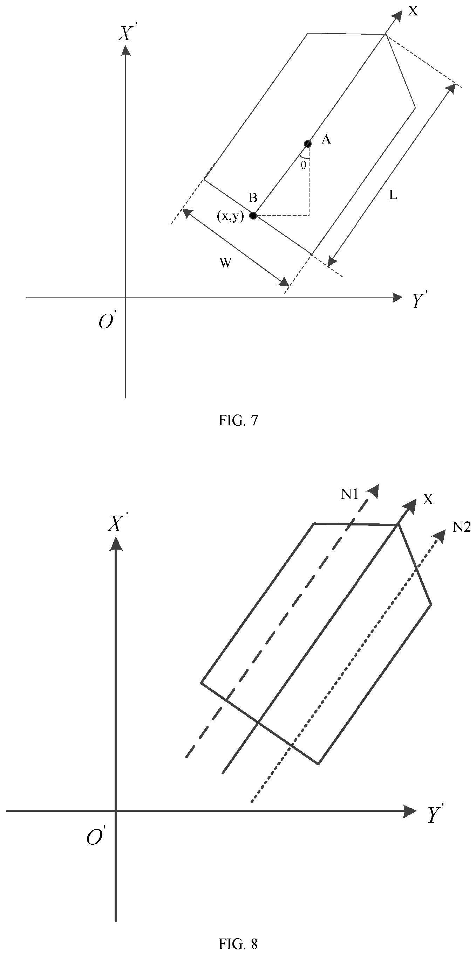

In some embodiments, the processor 16 may set the position of a certain target point on the water carrier 20 as the position of the water carrier 20. As shown in FIG. 7, a world coordinate system is illustrated. Assume that the length of the water carrier 20 is L, the width is W, the target point is a center point A of the water carrier 20, position data acquired by the global navigation satellite system 50 is (x, y), and the heading angle of the water carrier 20 is denoted as θ. If the thruster 10 is mounted at a midpoint B of the stern of the water carrier 20 as shown in the figure, coordinates (x_{A}, y_{A}) of the center point A of the water carrier 20 satisfy the following formulas: ${x}_{A} = x + \sqrt{{\left(x-{x}_{A}\right)}^{2} + {\left(y-{y}_{A}\right)}^{2}} * cos θ ;$ ${y}_{A} = y + \sqrt{{\left(x-{x}_{A}\right)}^{2} + {\left(y-{y}_{A}\right)}^{2}} * sin θ .$

It can be understood that the foregoing calculation mode for the position of the water carrier 20 is merely exemplary and is not intended to limit the present application. In other embodiments, the target point may be another point on the water carrier 20, and the thruster 10 may also be mounted at other positions of the water carrier 20. In other embodiments, the position of the water carrier 20 may also be calculated based on the position of the thruster 10, the size of the water carrier 20 and the heading θ of the water carrier 20, and specific calculation modes are determined according to the position of the target point and the position of the thruster 10, which will not be enumerated one by one herein.

Since the detection frequency of the global navigation satellite system 50 is low, the global navigation satellite system 50 cannot output sufficient position data per unit time to assist the processor 16 in executing adjustment for position maintenance, which will affect implementation of position maintenance. To solve this problem, the processor 16 may perform interpolation processing, that is, insert one or more estimated position data between two adjacent pieces of position data output by the global navigation satellite system 50, so as to obtain sufficient position data to execute adjustment for position maintenance. As an example, the processor 16 may acquire the position of the water carrier 20 based on both the latest position data output by the global navigation satellite system 50 and the moving distance of the water carrier 20. The acquisition mode of the position of the water carrier 20 is illustrated below.

In some embodiments, acquiring the position of the water carrier 20 includes acquiring the latest position data output by the global navigation satellite system 50, and calculating the position of the water carrier 20 based on the moving distance of the water carrier 20 and the position data acquired by the global navigation satellite system 50. The foregoing moving distance refers to the distance traveled by the water carrier 20 in a time period from the moment when the global navigation satellite system 50 outputs the latest position data to the current moment. For example, assume that the moment when the global navigation satellite system 50 outputs the latest position data is T1, the current moment is T2, and the time interval between T1 and T2 is ΔT. The processor 16 may acquire the moving distance of the water carrier 20 within the time interval ΔT, and determine the position of the water carrier 20 at the moment T2 according to the moving distance and the position data output by the global navigation satellite system 50 at T1.

A moving distance d of the water carrier 20 may be calculated based on a moving speed v of the thruster 10 and the heading angle θ of the water carrier 20. As an example, the processor 16 may acquire power of the thruster 10 within the time interval ΔT, obtain the moving speed of the water carrier 20 within the time interval ΔT according to a mapping relationship between power and speed of the thruster 10, and then determine the moving distance of the water carrier 20 within the time interval ΔT based on the moving speed of the water carrier 20 within the time interval ΔT. Then, the foregoing moving distance is decomposed into coordinate components of the world coordinate system according to the heading angle θ of the water carrier 20. The coordinate component of the X'-axis of the world coordinate system is added to the X'-axis position data output by the global navigation satellite system 50 at T1 to obtain the current X'-axis position data of the water carrier 20; the coordinate component of the Y'-axis of the world coordinate system is added to the Y'-axis position data output by the global navigation satellite system 50 at T1 to obtain the current Y'-axis position data of the water carrier 20. The current X'-axis position data and current Y'-axis position data of the water carrier 20 can indicate the current position of the water carrier 20. It should be noted that the heading angle θ of the water carrier 20 may be output by the global navigation satellite system 50. However, in this embodiment, since the detection frequency of the global navigation satellite system 50 is low, the processor 16 may not have obtained the heading angle θ output by the global navigation satellite system 50 at this time. Therefore, in this embodiment, the processor 16 may convert the steering angle of the steerable member to obtain the heading angle θ.

In some embodiments, the moving distance of the water carrier 20 may be calculated based on acceleration data output by the inertial measurement sensor 40. The processor 16 may use the three-axis accelerometer to acquire acceleration information of the roll axis X and the pitch axis Y, perform secondary integration on the acceleration information of the roll axis X and the pitch axis Y respectively to obtain moving distances of the roll axis X and the pitch axis Y, and then convert the moving distances of the roll axis X and the pitch axis Y into coordinate components of the X'-axis and Y'-axis of the world coordinate system. The processor 16 then adds the X'-axis coordinate component to the X'-axis position data output by the global navigation satellite system 50 at T1 to obtain the current X'-axis position data of the water carrier 20, and adds the Y'-axis coordinate component to the Y'-axis position data output by the global navigation satellite system 50 at T1 to obtain the current Y'-axis position data of the water carrier 20. The current X'-axis position data and current Y'-axis position data of the water carrier 20 can indicate the current position of the water carrier 20. It can be understood that the detection frequency of the inertial measurement sensor 40 is higher than that of the global navigation satellite system 50, so data of the inertial measurement sensor 40 can be used to estimate position data of the water carrier 20. In this way, the processor 16 can obtain sufficient position data to better execute adjustment for position maintenance.

In Step S12, calculating the target thrust required by the thruster 10 may include calculating a thrust direction of the target thrust required by the thruster 10. The thrust direction of the target thrust is used to make the target position fall on a first axis of the water carrier 20, where the first axis is parallel to the roll axis X of the water carrier 20. As shown in FIG. 8, the first axis may be an axis indicated by a long dashed line N1 in the figure, an axis indicated by a short dashed line N2 in the figure, another axis parallel to the roll axis X, or the first axis may coincide with the roll axis X of the water carrier 20. It can be understood that the processor 16 sets the thrust direction of the target thrust to push the target position to fall on the first axis parallel to the roll axis X of the water carrier 20, thereby orienting the bow or stern of the water carrier 20 toward the target position. At this time, the processor 16 further adjusts the rotation direction of the propeller 112 to drive the water carrier 20 to move forward or backward, so that the water carrier 20 moves toward the target position and finally realizes position maintenance of the water carrier 20.

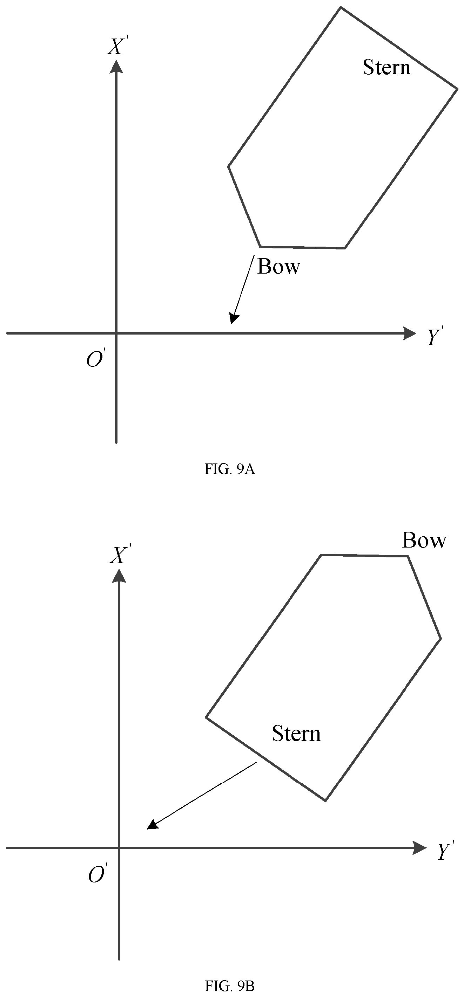

As shown in FIG. 9A, when the bow of the water carrier 20 is closer to the target position than the stern (assuming that the target position is the origin O' of the world coordinate system X'O'Y'), the target thrust is used to orient the bow of the water carrier 20 toward the target position and drive the water carrier 20 to move forward to stay at the target position. In this embodiment, the direction of the target thrust is indicated by a gray arrow. The target thrust may include a first component directed along the positive direction of the roll axis X (i.e., the direction from the stern of the water carrier 20 to the bow), and a second component perpendicular to the first component. The first component can drive the water carrier 20 to move forward, so that the bow of the water carrier 20 approaches the target position. The second component can change the orientation of the bow of the water carrier 20, so that the bow of the water carrier 20 faces the target position. When the bow of the water carrier 20 is closer to the target position, applying the target thrust directed along the positive direction of the roll axis X enables the water carrier 20 to move forward, which can realize position maintenance of the water carrier 20 with low control complexity and short time consumption.

As shown in FIG. 9B, when the stern of the water carrier 20 is closer to the target position than the bow (assuming that the target position is the origin O' of the world coordinate system X'O'Y'), the target thrust is used to orient the stern of the water carrier 20 toward the target position and drive the water carrier 20 to move backward to stay at the target position. In this embodiment, the direction of the target thrust is indicated by a gray arrow. The target thrust may include a third component directed along the negative direction of the roll axis X (i.e., the direction from the bow of the water carrier 20 to the stern), and a fourth component perpendicular to the third component. The third component can drive the water carrier 20 to move backward, so that the stern of the water carrier 20 approaches the target position. The fourth component can change the orientation of the stern of the water carrier 20, so that the stern of the water carrier 20 faces the target position. When the stern of the water carrier 20 is closer to the target position, applying the target thrust directed along the negative direction of the roll axis X enables the water carrier 20 to move backward, which can realize position maintenance of the water carrier 20 with low control complexity and short time consumption.

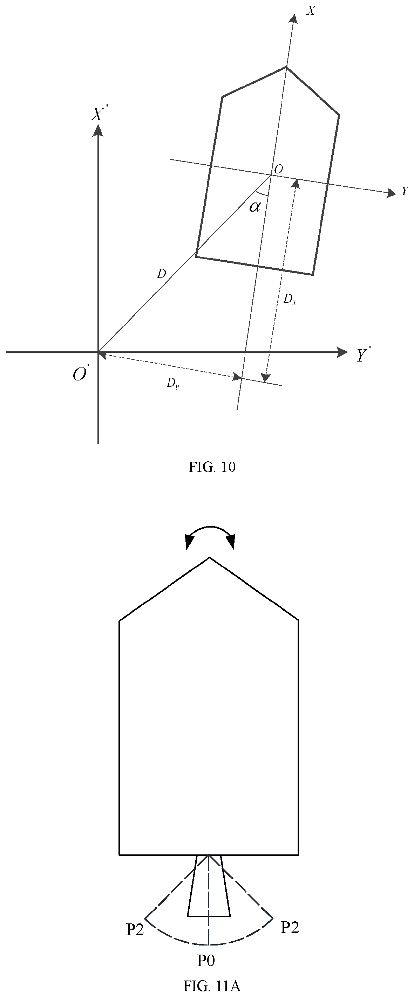

In some embodiments, calculating the target thrust required by the thruster 10 includes: acquiring subsequent positions of the water carrier 20; calculating an angle error between each subsequent position and the target position; determining the thrust direction of the target thrust based on the angle error. The subsequent positions of the water carrier 20 may be understood as real-time positions of the water carrier 20 after the moment when the processor 16 receives the position maintenance instruction. The acquisition mode of the subsequent positions of the water carrier 20 may refer to the foregoing embodiment for acquiring the current position of the water carrier 20, which will not be repeated herein. The angle error is used to represent a deviation between the heading of the water carrier 20 and the azimuth where the target position is located. For example, in the embodiment shown in FIG. 10, an included angle α between a connecting line connecting the center point of the water carrier 20 to the target position (assumed as the origin O' of the world coordinate system X'O'Y') and the roll axis X of the water carrier 20 may be determined as the angle error.

In some embodiments, calculating the angle error between each subsequent position and the target position includes: acquiring a distance between each subsequent position and the target position; acquiring a first projection distance of the distance on the first axis of the water carrier 20 and a second projection distance of the distance on a second axis of the water carrier 20, where the first axis is parallel to the roll axis X of the water carrier 20 and perpendicular to the second axis; calculating the angle error based on the first projection distance and the second projection distance. The first axis is shown in FIG. 8, which will not be repeated herein. The second axis is perpendicular to the first axis, and the second axis may be the pitch axis Y of the water carrier 20 or another axis parallel to the pitch axis Y. With reference to FIG. 10, assume that the first axis is the roll axis X, the second axis is the pitch axis Y, and a distance between each subsequent position and the target position is denoted as D. The distance D may be decomposed into a first projection distance Dₓ and a second projection distance D_{y} according to attitude data of the water carrier 20 (measurable by the inertial measurement sensor 40 on the water carrier 20). The angle error α can be obtained from a ratio of the first projection distance Dₓ to the second projection distance D_{y}: $α = arctan \frac{{D}_{y}}{{D}_{x}} .$

In the case where the thruster 10 includes a steerable member, the thrust direction of the target thrust is related to a steering position of the steerable member. When the steerable member includes the propulsion device 11 inside the thruster 10, the thrust direction is related to the steering position of the propulsion device 11. When the steerable member includes a rudder blade, the thrust direction is related to the steering position of the rudder blade. Determining the thrust direction of the target thrust based on the angle error may include determining a target steering position of the steerable member based on the angle error. It should be noted that when the target position has fallen on the axis where the roll axis of the water carrier 20 is located, it indicates that the angle error between the subsequent position and the target position is 0°, so the steerable member needs to be at the target steering position such that the target thrust generated by the propulsion device 11 is merely used to drive the water carrier 20 to move forward or backward without driving the water carrier 20 to turn. When the target position has not fallen on the roll axis of the water carrier 20, it indicates that the angle error between the subsequent position and the target position is not 0°, so the steerable member needs to be at the target steering position such that the target thrust generated by the propulsion device 11 can drive the water carrier 20 to turn, that is, the target thrust can provide a turning torque for the water carrier 20; meanwhile, the target thrust generated by the propulsion device 11 can drive the water carrier 20 to move forward or backward.

The target steering position of the steerable member is illustrated below taking the case where the steerable member includes the propulsion device 11 as an example. Reference is made to FIG. 11A. As an example, the target steering position may be located between a reference position P0 and a limit position P2. It should be noted that unless otherwise specified in each embodiment of the present application, the phrase "located between ..." shall be understood to include endpoint values. The reference position P0 refers to a position where the axis of the thrust direction of the propulsion device 11 passes through the center point of the water carrier 20, where the center point is an intersection point of a rotation axis around which the water carrier 20 rotates in place and the roll axis of the water carrier 20. The limit position P2 refers to the maximum position that the propulsion device 11 can rotate to relative to the reference position P0. In some embodiments of the present application, rotating the propulsion device 11 to the reference position P0 may be understood as a steering angle of 0° for the propulsion device 11, and rotating the propulsion device 11 to the limit position P2 may be understood as a maximum steering angle for the propulsion device 11. Particularly, in the example shown in FIG. 11A, when the propulsion device 11 rotates to the reference position P0, the direction of thrust generated by the propulsion device 11 is parallel to the midplane of the water carrier 20, and the axis of this direction passes through the center point of the water carrier 20. At this time, the thrust cannot provide a turning torque for the water carrier 20. Therefore, the target steering position needs to be set to deviate from the reference position P0 so that the water carrier 20 can turn. Similarly, for the case where the propulsion device 11 rotates to the reference position P0 such that the axis of the thrust direction of the propulsion device 11 passes through the center point of the water carrier 20 but the thrust direction is not parallel to the midplane of the water carrier 20, the target steering position is also set to deviate from the reference position P0 to enable the water carrier 20 to turn.

The number of limit positions P2 may be one or two. As shown in FIG. 11A, when there are two limit positions P2, the two limit positions P2 are respectively disposed on opposite sides of the reference position P0, where one limit position P2 is closer to the port side of the water carrier 20 relative to the reference position P0, and the other limit position P2 is closer to the starboard side of the water carrier 20 relative to the reference position P0. Steering angles corresponding to the two limit positions P2 may be distinguished by positive and negative signs. For example, the steering angle corresponding to the reference position P0 is 0°, the steering angle corresponding to one limit position P2 is -100°, and the steering angle corresponding to the other limit position P2 is 100°. In some embodiments, the steering angle corresponding to the limit position P2 closer to the port side (hereinafter referred to as port limit position) relative to the reference position P0 may be set to a negative value, and the steering angle corresponding to the limit position P2 closer to the starboard side (hereinafter referred to as starboard limit position) relative to the reference position P0 may be set to a positive value; in some embodiments, the steering angle corresponding to the starboard limit position may be set to a negative value and the steering angle corresponding to the port limit position may be set to a positive value, which is not limited herein.

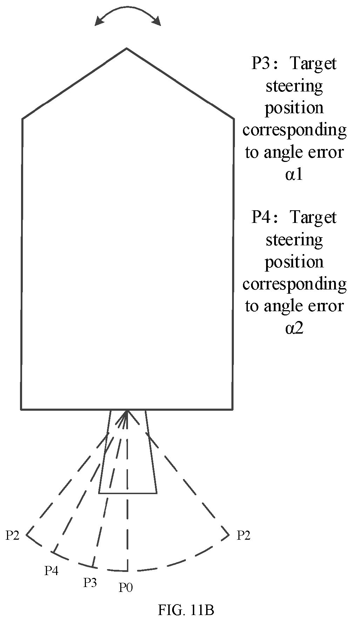

In some embodiments, determining the target steering position of the steerable member based on the angle error may be determining a target steering angle of the steerable member based on the angle error, where the target steering angle is the steering angle of the steerable member at the target steering position. As an example, with reference to FIG. 11A, multiple positions are disposed between the reference position P0 and the limit position P2. The target steering position may be any position between the reference position P0 and the limit position P2 (excluding the reference position P0), and the specific position between the reference position P0 and the limit position P2 is determined according to the angle error between each subsequent position and the target position. In some embodiments, a steering stroke for the steerable member to rotate from the reference position P0 to the target steering position is positively correlated with the angle error. In some embodiments, a smaller angle error corresponds to a smaller steering stroke from the target steering position to the reference position P0, that is, a smaller angle difference between the target steering position and the reference position, and the target steering position is closer to the reference position; a larger angle error corresponds to a larger steering stroke from the target steering position to the reference position P0, that is, a larger angle difference between the target steering position and the reference position, and the target steering position is closer to the limit position P2. As shown in FIG. 11B, P3 and P4 represent two different target steering positions, and a steering stroke from the target steering position P4 to the reference position P0 is larger than a steering stroke from the target steering position P3 to the reference position P0. When the angle error is α₁, the target steering position is as shown by P3; when the angle error α₂ is larger than α₁, the target steering position is as shown by P4. It can be seen that the steering stroke corresponding to the target steering position P3 is smaller than the steering stroke corresponding to the target steering position P4.

It can be understood that a smaller angle error indicates a smaller deviation degree of the target position relative to the first axis of the water carrier 20. At this time, only a small turning torque is required to push the water carrier 20 so that the target position falls on the first axis. A larger angle error indicates a larger deviation degree of the target position relative to the first axis of the water carrier 20. At this time, a larger turning torque is required to push the water carrier 20 so that the target position falls on the first axis. The magnitude of the turning torque is related to the steering angle of the steerable member. A larger steering angle of the steerable member at the target steering position enables the thruster 10 to provide a larger turning torque for the water carrier 20. Therefore, adaptively adjusting the steering angle of the steerable member according to the angle error can better adjust the attitude of the water carrier 20 and guarantee implementation of the position maintenance function.

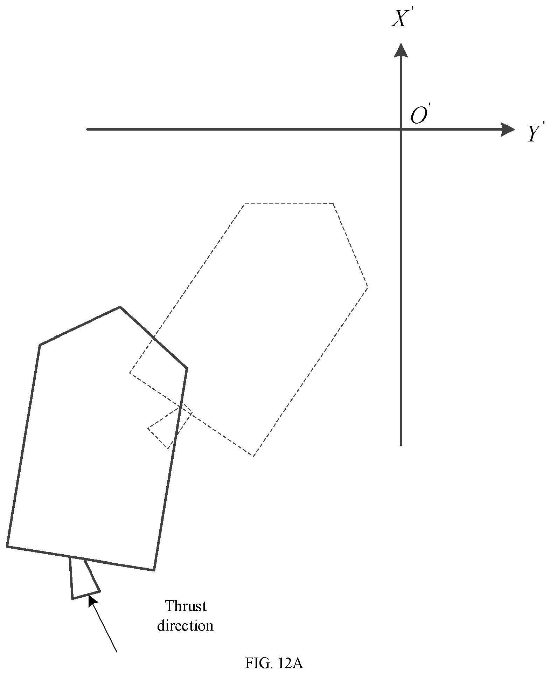

In the case where the bow of the water carrier 20 is closer to the target position than the stern, when the steerable member is at the target steering position, the target thrust generated by the propulsion device 11 can drive the water carrier 20 to turn to orient the bow of the water carrier 20 toward the target position and drive the water carrier 20 to move forward. With reference to FIG. 12A, assume that the position and heading of the water carrier 20 at a certain moment are shown by a solid outline in the figure, and the direction of the target thrust at this moment is indicated by a gray arrow. Under the action of this target thrust, the position and heading of the water carrier after a period of time are shown by a dashed outline in the figure. It can be seen that under the action of the target thrust, the heading of the water carrier 20 rotates clockwise, thereby orienting the bow of the water carrier 20 toward the target position and driving the water carrier 20 to move forward to get closer to the target position.

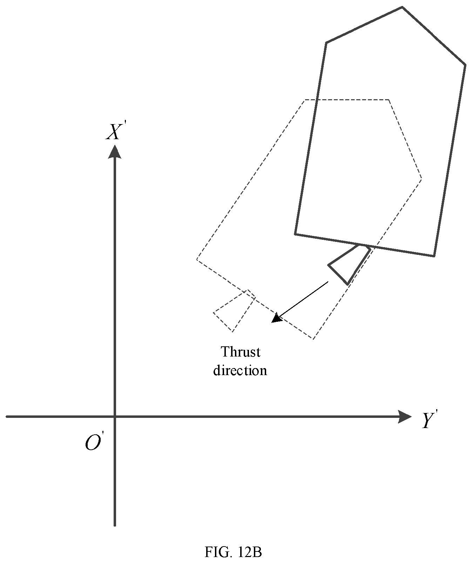

In the case where the stern of the water carrier 20 is closer to the target position than the bow, when the steerable member is at the target steering position, the target thrust generated by the propulsion device 11 can drive the water carrier 20 to turn to orient the stern of the water carrier 20 toward the target position and drive the water carrier 20 to move backward. With reference to FIG. 12B, assume that the position and heading of the water carrier 20 at a certain moment are shown by a solid outline in the figure, and the direction of the target thrust at this moment is indicated by a gray arrow. Under the action of this target thrust, the position and heading of the water carrier after a period of time are shown by a dashed outline in the figure. It can be seen that under the action of the target thrust, the heading of the water carrier 20 rotates clockwise, thereby orienting the stern of the water carrier 20 toward the target position and driving the water carrier 20 to move backward to get closer to the target position.

When the target position falls on the axis where the pitch axis of the water carrier 20 is located, the propulsion device 11 may generate a target thrust for orienting the bow of the water carrier 20 toward the target position, or may generate a target thrust for orienting the stern of the water carrier 20 toward the target position, which is not limited herein. Particularly, if the propulsion device 11 can output thrust parallel to the pitch axis and passing through the center point of the water carrier 20, for the case where the target position falls on the axis where the pitch axis of the water carrier 20 is located, the propulsion device 11 may output thrust in this direction to drive the water carrier 20 to translate along the pitch axis to gradually approach the target position until reaching the target position.

The foregoing embodiments are merely exemplary and are not intended to limit the present application. In other embodiments, thrust in other directions may be applied to drive the water carrier 20 to turn and move in other modes to realize position maintenance, which will not be enumerated one by one herein.

In some embodiments, the target steering position is determined based on the angle error and a preset steering parameter. For example, a steering angle of the target steering position may be equal to a product of the angle error and the preset steering parameter. The preset steering parameter is a fixed value calibrated in advance, such as a value calibrated and stored before delivery of the thruster 10. There may be one or more preset steering parameters. When multiple preset steering parameters are available, an adapted preset steering parameter may be selected according to an application scenario of the thruster 10 during actual use. It should be noted that the understanding of the foregoing "preset steering parameter" applies to all other "preset" parameters mentioned in other embodiments of the present application, which will not be repeated below. Assume that the angle error is denoted as α and the preset steering parameter is denoted as k, then a steering angle P of the target steering position may be recorded as: $P = k * α .$

In this way, conversion from the angle error to a corresponding target steering angle is realized via pre-calibrated parameters, so a more appropriate steering angle can be determined. Operation of the thruster 10 at this steering angle can better push the water carrier 20 to turn, thereby making the target position fall on the first axis of the water carrier 20 more quickly and accurately.

In some embodiments, calculating the target thrust required by the thruster 10 further includes calculating a thrust magnitude of the target thrust required by the thruster 10. Specifically, calculating the target thrust required by the thruster 10 further includes: calculating a distance error between each subsequent position and the target position; calculating the thrust magnitude of the target thrust based on the distance error. The distance error refers to a distance between each subsequent position of the water carrier 20 and the target position, and the thrust magnitude may be positively correlated with the distance error. When the water carrier 20 is far away from the target position, larger thrust is usually required to move the water carrier 20 to approach the target position, because the water carrier 20 is subject to large resistance in water and needs to overcome large frictional force to move. A larger target thrust can generate larger acceleration to overcome resistance and reach a higher navigation speed, improving efficiency of position maintenance. Assume that coordinates of the target point on the water carrier 20 are (x_{A}, y_{A}), coordinates of the target position are (x, y), then a distance error Δd may be represented by an Euclidean distance between the target point and the target position, recorded as: $Δ d = \sqrt{{\left(x-{x}_{A}\right)}^{2} + {\left(y-{y}_{A}\right)}^{2}} .$

In some embodiments, the thrust magnitude may be determined based on the distance error Δd and a preset distance parameter m, where the preset distance parameter m is a fixed value calibrated in advance. For example, the thrust magnitude may be equal to a product of the distance error Δd and the preset distance parameter m, and a thrust magnitude F may be recorded as: $F = Δ d * m .$

In this way, conversion from the distance error to a corresponding thrust magnitude is realized via pre-calibrated parameters, so a target thrust with a more appropriate thrust magnitude can be determined. Operation of the thruster 10 with this target thrust can better push the water carrier 20 to move forward or backward, thereby making the water carrier 20 reach the target position more quickly and accurately.

Furthermore, multiple preset distance parameters may be available. It can be understood that characteristic parameters (such as mass and size) of different types of water carriers 20 are different, and corresponding conversion relationships from distance error to thrust magnitude are also different. Therefore, multiple preset distance parameters may be calibrated in advance, and different preset distance parameters are selected for conversion from distance error to thrust magnitude for different types of water carriers 20, so that the final thrust magnitude better conforms to characteristics of the water carrier 20 and facilitates movement control of the water carrier 20.

In some embodiments, calculating the thrust magnitude of the target thrust based on the distance error includes: acquiring a moving speed of the water carrier 20 at each subsequent position; calculating a speed error between the moving speed and an expected speed when the water carrier 20 reaches the target position, where the expected speed is less than a preset speed threshold, that is, the speed of the water carrier 20 approaches 0 m/s (including a case equal to 0 m/s) when the water carrier 20 reaches the target position. For example, assume that the moving speed of the water carrier 20 at a subsequent position is 3 m/s and the expected speed is 0, then the speed error is -3 m/s. Setting the expected speed can effectively reduce the situation where the water carrier 20 continues to move after reaching the target position and deviates from the target position again, requiring continuous adjustment to correct the deviation, thereby minimizing adjustment actions required for the water carrier 20 to stay at the target position, reducing shaking feeling of the water carrier 20 caused by position adjustment, and improving user operation experience.

The foregoing moving speed and expected speed include speeds of the water carrier 20 on the first axis, where the first axis is parallel to the roll axis X of the water carrier 20. In some embodiments, the moving speed of the water carrier 20 at each subsequent position may be acquired via the inertial measurement sensor 40. This acquisition mode has low complexity and high real-time performance for acquiring speed because the detection frequency of the inertial measurement sensor 40 is high. In another embodiment, the moving speed of the water carrier 20 may be acquired jointly via the inertial measurement sensor 40 and the global navigation satellite system 50. Joint acquisition via the inertial measurement sensor 40 and the global navigation satellite system 50 can effectively improve accuracy of the acquired moving speed.

In some embodiments, acquiring the moving speed of the water carrier 20 at each subsequent position includes: calculating a first speed of the water carrier 20 on the first axis based on acceleration data output by the inertial measurement sensor 40; determining a second speed of the water carrier 20 on the first axis based on speed data output by the global navigation satellite system 50; fusing the first speed and the second speed to obtain the moving speed of the water carrier 20 at each subsequent position. The first speed may be obtained by integrating acceleration data output by the inertial measurement sensor 40. The global navigation satellite system 50 may acquire multiple pieces of position data (taking two pieces as an example) of the water carrier 20, determine a moving distance of the water carrier 20 based on the two pieces of position data, and determine the moving speed of the water carrier 20 based on the moving distance and a time interval for acquiring the two pieces of position data. The moving speed acquired by the global navigation satellite system 50 is decomposed onto the first axis to obtain the second speed. Fusing the first speed and the second speed may be performing weighted processing on the first speed and the second speed.

In some embodiments, the thrust magnitude is positively correlated with the distance error, and the thrust magnitude is positively correlated with the speed error. In some embodiments, the thrust magnitude is determined based on the speed error, the distance error and preset parameters, where the preset parameters include at least one of a preset distance parameter m or a preset speed parameter n. In an example where both the preset distance parameter m and the preset speed parameter n are adopted, weighted processing is performed on the distance error based on the preset distance parameter m, weighted processing is performed on the speed error based on the preset speed parameter n, and the thrust magnitude is obtained based on the weighted distance error and weighted speed error. A thrust magnitude F may be recorded as: $F = m * Δ d + n * Δ ν .$

In this way, conversion from the distance error and speed error to a corresponding thrust magnitude is realized via pre-calibrated parameters, so a target thrust with a more appropriate thrust magnitude can be determined. Operation of the thruster 10 with this target thrust can better push the water carrier 20 to move forward or backward, thereby making the water carrier 20 reach the target position more quickly and accurately.

Furthermore, multiple preset parameters may be available. It can be understood that characteristic parameters (such as mass and size) of different types of water carriers 20 are different, and corresponding conversion relationships from distance error and speed error to thrust magnitude are also different. Therefore, multiple preset parameters may be calibrated in advance, and different preset parameters are selected for conversion from distance error and speed error to thrust magnitude for different types of water carriers 20, so that the final thrust magnitude better conforms to characteristics of the water carrier 20 and facilitates movement control of the water carrier 20.

In Step S13, after the target thrust required by the propulsion device 11 is calculated, considering that different types of thrusters 10 adopt different propulsion motors 111 and propellers 112, leading to different operating parameters required for different types of thrusters 10 to output the target thrust, controlling the thruster 10 to generate the target thrust may include: determining target operating parameters matching the thrust magnitude of the target thrust based on a mapping relationship between thrust magnitude and operating parameters of the thruster 10; controlling the thruster 10 to operate with the target operating parameters to generate the target thrust. The mapping relationship between thrust magnitude and operating parameters may be pre-calibrated information prestored inside the thruster 10 for calling by the processor 16. The operating parameters include power, current, voltage and other parameters, which is not limited herein.

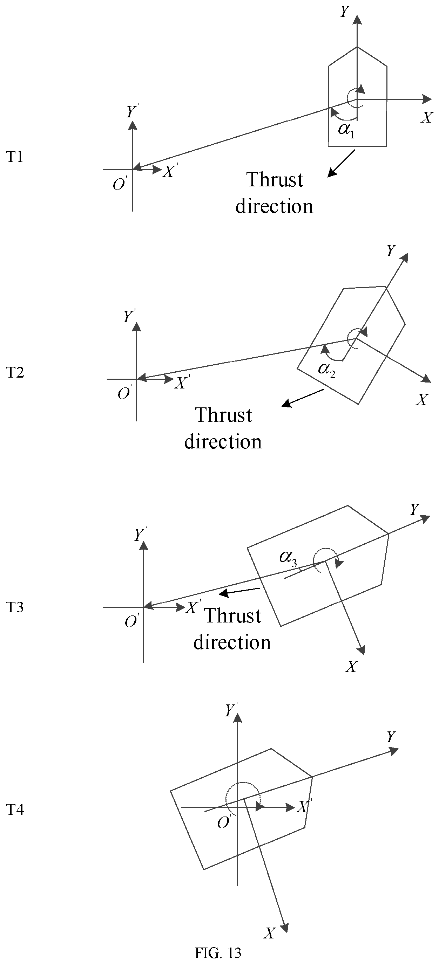

It should be noted that the actions of calculating the target thrust and controlling the propulsion device 11 to generate the target thrust may be understood as one adjustment cycle. To realize position maintenance of the water carrier 20, the processor 16 may only need to execute actions of one adjustment cycle to move the subsequent position of the water carrier 20 to the target position, or may need to execute actions of multiple adjustment cycles to move the subsequent position of the water carrier 20 to the target position. With reference to FIG. 13, assume that the target position is the origin of the world coordinate system. At moment T1, the water carrier 20 heads along the Y'-axis of the world coordinate system, an angle error of the water carrier 20 is α₁, and the direction of the target thrust is indicated by a gray arrow in the figure. Under the action of this target thrust, the water carrier 20 starts to move and turn clockwise (as indicated by a dashed arrow in the figure). After moment T1, at moment T2, the angle error of the water carrier 20 is α₂, and α₂ is smaller than α₁. As the angle error of the water carrier 20 changes, the thrust direction of the target thrust also changes. Under the action of the changed target thrust, the attitude of the water carrier 20 continues to change, and at moment T3 after moment T2, the angle error further decreases from α₂ to α₃, and the thrust direction of the target thrust also continues to change along with the angle error. At moment T4, the water carrier 20 reaches the target position, and position maintenance is completed. It should be noted that in FIG. 13, position maintenance control is performed to make the position of the water carrier 20 coincide with the target position, but in actual application, it is deemed that the water carrier 20 has stayed at the target position as long as a distance between the position of the water carrier 20 and the target position falls within a preset range, rather than requiring the position of the water carrier 20 to strictly coincide with the target position.

In the present application, besides calculating the thrust magnitude of the target thrust and generating the target thrust based on the calculated thrust magnitude, the target thrust with a preset thrust value may also be generated, or the target thrust corresponding to preset operating parameters may be generated.

In the case where the thrust magnitude of the target thrust is a preset thrust value, the preset thrust value may be an artificially set thrust value or a default thrust value. Similarly, there is a mapping relationship between thrust magnitude and operating parameters of the thruster 10, so controlling the thruster 10 to generate the target thrust includes: determining target operating parameters matching the preset thrust value based on the mapping relationship between thrust magnitude and operating parameters of the thruster 10; controlling the thruster 10 to operate with the target operating parameters to generate the target thrust.

In the case where the target thrust corresponding to preset operating parameters is generated, controlling the thruster 10 to generate the target thrust includes: controlling the thruster 10 to operate with preset operating parameters to generate the target thrust. In this embodiment, the thrust magnitude of the target thrust does not need to be calculated, and the thruster 10 is directly set to operate with preset operating parameters to generate the target thrust corresponding to the preset operating parameters.

In the case where the thrust magnitude of the target thrust is a preset thrust value, the processor 16 determines target operating parameters matching the preset thrust value in the first adjustment cycle, and operates with the target operating parameters in the first adjustment cycle and all subsequent adjustment cycles. Therefore, in subsequent adjustment cycles, the processor 16 only needs to adjust the steering angle of the steerable member. In the case where the thruster 10 operates with preset operating parameters, the processor only needs to adjust the steering angle of the steerable member in each adjustment cycle without calculating target operating parameters.

In the foregoing embodiments of the present application, during activation of the position maintenance function, the thruster 10 simultaneously adjusts the thrust direction and outputs thrust magnitude to gradually orient the bow or stern of the water carrier 20 toward the target position and drive the water carrier to gradually approach the target position. This synchronous adjustment mode can make the water carrier 20 reach the target position more quickly and improve efficiency of position maintenance.

The method of the present application further includes: when a distance error between each subsequent position of the water carrier 20 and the target position falls within a preset error range, controlling the thruster 10 to stop generating thrust. When the subsequent position of the water carrier 20 is relatively close to the target position, the water carrier 20 can continue to move under inertia to reach the target position. Therefore, controlling the thruster 10 to stop generating thrust when the distance error falls within the preset error range can, on the one hand, make the water carrier 20 reach the target position at a low speed and prevent the water carrier 20 from continuing to deviate from the target position due to residual speed upon reaching the target position; on the other hand, stopping thrust generation in advance before reaching the target position can reduce energy consumption of the water carrier 20. It should be noted that the processor 16 controlling the propulsion device 11 to stop thrust output does not mean that the thruster 10 exits the position maintenance function. It should be understood that this stopping operation is merely because the position of the water carrier 20 has approximated the target position and no adjustment is required, and the position maintenance function remains activated. Once the position of the water carrier 20 deviates from the target position, the processor 16 will continue to control the propulsion device 11 to generate thrust.

In the method of the present application, during activation of the position maintenance function, the steering angle and thrust of the propulsion device 11 are independently determined and executed by the processor 16 according to angle error, speed error and other information, rather than determined based on steering instructions and the like sent by the operating device 30 after user operation on the operating device 30. Therefore, the method of the present application needs to be executed when movable components of the operating device 30 are not activated, where the operating device 30 includes but is not limited to a throttle lever, an operating button, a steering wheel, a tiller and the like. "Not activated" may be understood as the operating device 30 not receiving user operations. For example, the movable components of the operating device 30 are components for receiving user steering operations, such as a disk surface of a steering wheel, a handle of a tiller, and the like. The operating device 30 being not activated may include the operating device 30 not receiving user steering control operations. Correspondingly, the method of the present application may be executed when the thruster 10 does not receive steering instructions sent by the operating device 30. In some embodiments, the movable components of the operating device 30 are components for receiving user throttle operations, such as a throttle lever of a remote controller, a rocker of a wireless joystick, and the like. The operating device 30 being not activated may include the operating device 30 not receiving user throttle control operations. Correspondingly, the method of the present application may be executed when the thruster 10 does not receive throttle instructions sent by the operating device 30. When the operating device 30 is activated, it usually indicates that the user needs to manipulate the thruster 10. Therefore, in this case, position maintenance control is not executed, and the thruster 10 is controlled in response to movement instructions output by the user via the operating device 30, so that the control process of the thruster 10 conforms to user operation requirements. When movable components of the operating device 30 are not activated, it usually indicates that the user has no demand for manipulating the thruster 10. At this time, position maintenance control may be executed to keep the water carrier 20 at the target position.

During activation of the position maintenance function, the user may operate the operating device 30. For this scenario, the method of the present application further includes: during execution of position maintenance control by the thruster 10, if the thruster 10 receives a movement instruction sent by the operating device 30 for moving the water carrier 20, continuing to execute position maintenance control after the thruster 10 executes the movement instruction and the water carrier 20 satisfies a state maintenance condition, where the operating device 30 is used to manipulate the thruster 10. As one example, the state maintenance condition includes that a deviation value of the position of the water carrier 20 after movement relative to the target position is less than a first deviation threshold. That is, when the deviation value is less than the first deviation threshold, the position maintenance function remains activated, and the processor 16 continues to execute position maintenance control. When the deviation value reaches (equal to or greater than) the first deviation threshold, the thruster 10 exits the position maintenance function, and the processor 16 controls the propulsion device 11 and other components based on instructions sent by the operating device 30. In this way, the thruster 10 can automatically exit the position maintenance function without manual operation by the user, reducing human intervention and improving convenience and user experience. In the embodiments of the present application, the first deviation threshold may be 0.5 m, 0.7 m, 0.8 m, and the like, which is not limited herein.

For the case where the deviation value is less than the first deviation threshold, the processor 16 continuing to execute position maintenance control may include: when the deviation value falls between a second deviation threshold and the first deviation threshold, updating the position of the water carrier 20 after movement as a new target position and continuing to execute position maintenance control; when the deviation value is less than the second deviation threshold, keeping the original target position unchanged and continuing to execute position maintenance control, where the second deviation threshold is less than the first deviation threshold. The second deviation threshold may be 0.2 m, 0.3 m, 0.4 m, and the like, which is not limited herein. It can be understood that when the deviation value is less than the second deviation threshold, it indicates that the user may have accidentally operated the operating device 30, leading to the thruster 10 responding to instructions of the operating device 30 to operate and further causing movement of the water carrier 20. Therefore, for this case, the processor 16 may deem it an accidental user operation where the user subjectively has no intention to change the target position, and the processor 16 still executes position maintenance control based on the original target position. In this way, the problem of exit of the position maintenance function caused by accidental user operation can be avoided. When the deviation value falls between the second deviation threshold and the first deviation threshold, the water carrier 20 has rotated by a relatively large angle without exceeding the rotation amplitude corresponding to the first deviation threshold, which indicates that the user may intend to fine-tune the target position. Therefore, for this case, the position of the water carrier 20 after movement is taken as a new target position. In subsequent control, position maintenance control is executed based on the new target position. In this way, the user does not need to re-execute the operation of activating the position maintenance function when fine-tuning the target position, and the thruster 10 can automatically execute the position maintenance function, making user operation more convenient.

It should be noted that the method of the present application is applicable not only to the case where the water carrier 20 is equipped with only one thruster 10, but also to the case where the water carrier 20 is equipped with multiple thrusters 10 (such as two, three, four thrusters, and the like). In the case where the water carrier 20 is equipped with multiple thrusters 10, during activation of the position maintenance function, the processor 16 may activate only one of the multiple thrusters 10 to execute position maintenance control. This one thruster 10 may be any one of the multiple thrusters 10. The method of the present application further includes: detecting whether other thrusters in a working state exist on the water carrier 20; if no other working thrusters exist, executing the step of calculating the target thrust required by the thruster 10. If other working thrusters exist, the step of calculating the target thrust required by the thruster 10 may not be executed, and prompt information may be output to remind the user that the present thruster 10 is not executing position maintenance control.

In the case where the water carrier 20 is equipped with multiple thrusters 10, one of the multiple thrusters 10 may be set as a main engine, and all other thrusters among the multiple thrusters 10 may be set as auxiliary engines. Position maintenance control may be executed by the main engine. The processor 16 may determine the main engine among the multiple thrusters 10 and control the main engine to execute position maintenance control.

In some embodiments, a position maintenance control mode may be determined according to the number of thrusters in a working state. The position maintenance control mode includes a single-engine mode and a multi-engine mode. When the number of thrusters in a working state is 1, the single-engine mode is entered to execute the step of calculating the target thrust required by the thruster 10, so as to realize position maintenance of the water carrier 20 based on a single thruster 10. When the number of thrusters in a working state is greater than 1, the multi-engine mode is entered to realize position maintenance of the water carrier 20 based on multiple thrusters 10.

Each thruster 10 is provided with a processor 16, and the processors 16 of the multiple thrusters 10 are connected to the same bus. The number of thrusters in a working state may be determined according to the number of processors 16 accessing the bus. When a thruster 10 accesses the bus, the processor 16 of the thruster 10 may send a signal to the bus.

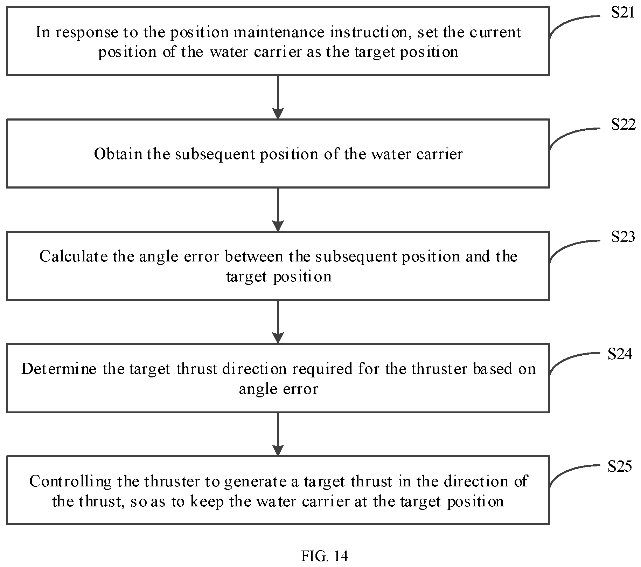

Reference is made to FIG. 14. The present application further provides another method for maintaining the position of a water carrier based on a single thruster. The method includes the following steps.

Step S21: In response to a position maintenance instruction, take the current position of the water carrier 20 as a target position.

Step S22: Acquire subsequent positions of the water carrier 20.

Step S23: Calculate an angle error between each subsequent position and the target position.

Step S24: Determine a thrust direction of the target thrust required by the thruster 10 based on the angle error.

Step S25: Control the thruster 10 to generate the target thrust directed along the thrust direction, so that the water carrier 20 stays at the target position.

Details of this embodiment are described in the foregoing method embodiments, which will not be repeated herein.

In some embodiments, the position of the water carrier 20 is acquired based on a global navigation satellite system.

In some embodiments, the global navigation satellite system is disposed on the water carrier 20.

In some embodiments, the global navigation satellite system is disposed inside the thruster 10.

In some embodiments, acquiring the position of the water carrier 20 includes: acquiring the position of the thruster 10 and the size of the water carrier 20; determining the position of the water carrier 20 based on the position of the thruster 10 and the size of the water carrier 20.

In some embodiments, the position of the water carrier 20 is acquired based on a global navigation satellite system and an inertial measurement sensor 40.

In some embodiments, acquiring the position of the water carrier 20 includes: acquiring the latest position data output by the global navigation satellite system; calculating a moving distance of the water carrier 20 based on acceleration data output by the inertial measurement sensor 40, where the moving distance refers to the distance traveled by the water carrier 20 in a time period from the moment when the global navigation satellite system outputs the latest position data to the current moment; calculating the position of the water carrier 20 based on the position data and the moving distance.

In some embodiments, acquiring the position of the water carrier 20 includes: acquiring the latest position data output by the global navigation satellite system; calculating a moving distance of the water carrier 20 based on a moving speed of the thruster 10 and a heading of the water carrier 20, where the moving distance refers to the distance traveled by the water carrier 20 in a time period from the moment when the global navigation satellite system outputs the latest position data to the current moment; calculating the position of the water carrier 20 based on the position data and the moving distance.

In some embodiments, calculating the angle error between each subsequent position and the target position includes: acquiring a distance between each subsequent position and the target position; acquiring a first projection distance of the distance on a first axis of the water carrier 20 and a second projection distance of the distance on a second axis of the water carrier 20, where the first axis is parallel to the roll axis of the water carrier 20 and perpendicular to the second axis; calculating the angle error based on the first projection distance and the second projection distance.

In some embodiments, the thruster 10 includes a steerable member, and determining the thrust direction of the target thrust required by the thruster 10 based on the angle error includes: determining a target steering position of the steerable member based on the angle error.

In some embodiments, the steerable member includes the propulsion device 11 inside the thruster 10.

In some embodiments, the thruster 10 includes a rudder blade and a propulsion device 11, and the steerable member includes the rudder blade.

In some embodiments, a steering stroke for the steerable member to rotate from a reference position to the target steering position is positively correlated with the angle error, where the reference position refers to a position where the axis of the thrust direction of the thruster passes through the center point of the water carrier 20.

In some embodiments, the target steering position is determined based on the angle error and a preset steering parameter.

In some embodiments, the method further includes: calculating a distance error between each subsequent position and the target position; calculating a thrust magnitude of the target thrust based on the distance error; controlling the thruster 10 to generate the target thrust directed along the thrust direction includes: controlling the thruster 10 to generate the target thrust directed along the thrust direction and with a magnitude equal to the thrust magnitude.

In some embodiments, the thrust magnitude is positively correlated with the distance error.

In some embodiments, the thrust magnitude is determined based on the distance error and a preset distance parameter.

In some embodiments, calculating the thrust magnitude of the target thrust based on the distance error includes: acquiring a moving speed of the water carrier 20 at each subsequent position; calculating a speed error between the moving speed and an expected speed when the water carrier 20 reaches the target position, where the expected speed is less than a speed threshold; calculating the thrust magnitude of the target thrust based on the distance error and the speed error.

In some embodiments, the moving speed and the expected speed include speeds of the water carrier 20 on a first axis, where the first axis is parallel to the roll axis X of the water carrier 20.

In some embodiments, the moving speed is acquired via an inertial measurement sensor.

In some embodiments, the moving speed is acquired jointly via an inertial measurement sensor and a global navigation satellite system.

In some embodiments, acquiring the moving speed of the water carrier 20 at each subsequent position includes: calculating a first speed of the water carrier 20 on the first axis based on acceleration data output by the inertial measurement sensor 40; determining a second speed of the water carrier 20 on the first axis based on speed data output by the global navigation satellite system; fusing the first speed and the second speed to obtain the moving speed of the water carrier 20 at each subsequent position.

In some embodiments, the thrust magnitude is positively correlated with the distance error; and/or the thrust magnitude is positively correlated with the speed error.

In some embodiments, the thrust magnitude is determined based on the speed error, the distance error and preset parameters, where the preset parameters include at least one of a preset distance parameter or a preset speed parameter.

In some embodiments, controlling the thruster 10 to generate the target thrust along the thrust direction includes: determining target operating parameters matching the thrust magnitude of the target thrust based on a mapping relationship between thrust magnitudes and operating parameters of the thruster 10; and controlling the thruster 10 to operate with the target operating parameters, so as to generate the target thrust that follows the thrust direction and has a thrust magnitude matching the target operating parameters.

In some embodiments, the target thrust has a preset thrust magnitude.

In some embodiments, controlling the thruster 10 to generate the target thrust along the thrust direction includes: determining target operating parameters matching the preset thrust magnitude based on a mapping relationship between thrust magnitudes and operating parameters of the thruster 10; and controlling the thruster 10 to operate with the target operating parameters, so as to generate the target thrust that follows the thrust direction and carries the preset thrust magnitude.

In some embodiments, controlling the thruster 10 to generate the target thrust along the thrust direction includes controlling the thruster 10 to operate with preset operating parameters to generate the target thrust directed along the thrust direction.

In some embodiments, the method further includes controlling the thruster 10 to stop outputting thrust when a distance error between a subsequent position of the water carrier 20 and the target position falls within a preset error range.

In some embodiments, the method is executed when movable components of an operating device 30 are inactive, and the operating device 30 is configured to manipulate the thruster 10.

In some embodiments, the method is executed when the thruster 10 does not receive a steering instruction transmitted by the operating device 30.

In some embodiments, the method is executed when the thruster 10 does not receive a throttle instruction transmitted by the operating device 30.

In some embodiments, the method further includes the following step: during the thruster 10's execution of position maintenance control, if the thruster 10 receives a movement instruction sent by the operating device 30 for moving the water carrier 20, the position maintenance control shall be resumed after the thruster 10 executes the movement instruction and the water carrier 20 satisfies a state maintenance condition, wherein the operating device 30 is used to control the thruster 10.

In some embodiments, the state maintenance condition specifies that a deviation value of the post-movement position of the water carrier 20 relative to the target position is smaller than a first deviation threshold.

In some embodiments, resuming the position maintenance control includes: updating the post-movement position of the water carrier 20 as the target position and continuing the position maintenance control when the deviation value lies between a second deviation threshold and the first deviation threshold, where the second deviation threshold is less than the first deviation threshold; and retaining the original target position unchanged and continuing the position maintenance control when the deviation value is smaller than the second deviation threshold.

In some embodiments, the execution of position maintenance control is terminated once the deviation value reaches the first deviation threshold.

In some embodiments, the method further includes detecting whether any other thrusters are operating on the water carrier 20; if no other working thruster is detected, executing the step of calculating the target thrust required by the thruster 10.

For detailed specifics of the above embodiments, reference may be made to the foregoing method embodiments, which will not be repeated herein.

The present application further provides a computer-readable storage medium storing computer instructions thereon. When the computer instructions are executed by a processor, the processor implements the method for maintaining the position of a water carrier based on a single thruster as described in any embodiment of the present application. The computer-readable storage medium may be Phase-Change Memory (PRAM), Static Random-Access Memory (SRAM), Dynamic Random-Access Memory (DRAM), other types of Random-Access Memory (RAM), Read-Only Memory (ROM), Electrically Erasable Programmable Read-Only Memory (EEPROM), flash memory or other memory technologies, Compact Disc Read-Only Memory (CD-ROM), Digital Versatile Disc (DVD) or other optical storage media, magnetic tape cassettes, magnetic tape and magnetic disk storage or other magnetic storage devices, or any other nontransmission medium capable of storing information accessible by computing device.

It should be noted that relational terms such as "first" and "second" used herein are merely adopted to distinguish one entity or operation from another entity or operation, and do not necessarily require or imply any actual relationship or sequence between such entities or operations. The terms "comprise," "include" or any variants thereof are intended to cover nonexclusive inclusion, such that a process, method, article or apparatus comprising a series of elements encompasses not only those elements, but also other elements not explicitly listed, or elements inherent to such process, method, article or apparatus. Without further limitations, an element defined by the phrase "comprising a ..." does not exclude the presence of additional identical elements in the process, method, article or apparatus that contains the element.

The method and apparatus provided by the embodiments of the present application have been described in detail above. Specific examples are adopted in this specification to elaborate the principles and implementation modes of the present application. The descriptions of the foregoing embodiments are merely intended to assist in understanding the method and core idea of the present application. Meanwhile, various modifications may be made by persons skilled in the art to the specific implementation modes and application scopes in accordance with the conception of the present application. In conclusion, the content of this specification shall not be construed as a limitation to the present application.

## Claims

1. A method for maintaining a position of a water carrier based on a single thruster, wherein the method comprises:
in response to a position maintenance instruction, setting a current position of the water carrier as a target position;
calculating a target thrust required by the thruster, wherein the target thrust is configured to orient a bow or a stern of the water carrier toward the target position and drive the water carrier to move forward or backward so as to maintain the water carrier at the target position;
controlling the thruster to generate the target thrust.

2. The method of claim 1, wherein a thrust direction of the target thrust is configured to make the target position fall on a first axis of the water carrier, and the first axis is parallel to a roll axis of the water carrier.

3. The method of claim 2, wherein the first axis coincides with the roll axis.

4. The method of claim 1, wherein when the bow is closer to the target position than the stern, the target thrust is configured to orient the bow toward the target position and drive the water carrier to move forward so as to maintain the water carrier at the target position.

5. The method of claim 1, wherein when the stern is closer to the target position than the bow, the target thrust is configured to orient the stern toward the target position and drive the water carrier to move backward so as to maintain the water carrier at the target position.

6. The method of any one of claims 1 to 5, wherein calculating the target thrust required by the thruster comprises:
acquiring a subsequent position of the water carrier;
calculating an angle error between the subsequent position and the target position;
determining a thrust direction of the target thrust based on the angle error.

7. The method of claim 6, wherein a position of the water carrier is acquired via a global navigation satellite system.

8. The method of claim 7, wherein the global navigation satellite system is disposed on the water carrier.

9. The method of claim 7, wherein the global navigation satellite system is disposed on the thruster.

10. The method of claim 9, wherein acquiring the position of the water carrier comprises:
acquiring a position of the thruster and a dimension of the water carrier;
determining the position of the water carrier based on the position of the thruster and the dimension of the water carrier.

11. The method of claim 6, wherein the position of the water carrier is acquired via a global navigation satellite system and an inertial measurement sensor.

12. The method of claim 11, wherein acquiring the position of the water carrier comprises:
acquiring latest position data output by the global navigation satellite system;
calculating a moving distance of the water carrier based on acceleration data output by the inertial measurement sensor, wherein the moving distance is a distance traveled by the water carrier within a time interval from a moment when the global navigation satellite system outputs the latest position data to a current moment;
calculating the position of the water carrier based on the position data and the moving distance.

13. The method of claim 7, wherein acquiring the position of the water carrier comprises:
acquiring latest position data output by the global navigation satellite system;
calculating a moving distance of the water carrier based on a moving speed of the thruster and a heading of the water carrier, wherein the moving distance is a distance traveled by the water carrier within a time interval from a moment when the global navigation satellite system outputs the latest position data to a current moment;
calculating the position of the water carrier based on the position data and the moving distance.

14. The method of claim 6, wherein calculating the angle error between the subsequent position and the target position comprises:
acquiring a distance between the subsequent position and the target position;
acquiring a first projection distance of the distance on a first axis and a second projection distance of the distance on a second axis of the water carrier, wherein the first axis is parallel to the roll axis of the water carrier and perpendicular to the second axis;
calculating the angle error based on the first projection distance and the second projection distance.

15. The method of claim 14, wherein the thruster comprises a steerable member, and determining the thrust direction of the target thrust based on the angle error comprises determining a target steering position of the steerable member based on the angle error.

16. The method of claim 15, wherein the steerable member comprises a propulsion device inside the thruster.

17. The method of claim 15, wherein the thruster comprises a rudder blade and a propulsion device, and the steerable member comprises the rudder blade.

18. The method of claim 15, wherein a steering stroke of the steerable member rotating from a reference position to the target steering position is positively correlated with the angle error, and the reference position refers to a position where an axis of the thrust direction of the thruster passes through a center point of the water carrier.

19. The method of claim 15, wherein the target steering position is determined based on the angle error and a preset steering parameter.

20. The method of claim 6, wherein calculating the target thrust required by the thruster further comprises:
calculating a distance error between the subsequent position and the target position;
calculating a thrust magnitude of the target thrust based on the distance error.

21. The method of claim 20, wherein the thrust magnitude is positively correlated with the distance error.

22. The method of claim 20, wherein the thrust magnitude is determined based on the distance error and a preset distance parameter.

23. The method of claim 20, wherein calculating the thrust magnitude of the target thrust based on the distance error comprises:
acquiring a moving speed of the water carrier at the subsequent position;
calculating a speed error between the moving speed and an expected speed when the water carrier arrives at the target position, wherein the expected speed is less than a speed threshold;
calculating the thrust magnitude of the target thrust based on the distance error and the speed error.

24. The method of claim 23, wherein the moving speed and the expected speed are speeds of the water carrier on a first axis, and the first axis is parallel to the roll axis of the water carrier.

25. The method of claim 24, wherein the moving speed is acquired via an inertial measurement sensor.

26. The method of claim 24, wherein the moving speed is acquired jointly via an inertial measurement sensor and a global navigation satellite system.

27. The method of claim 26, wherein acquiring the moving speed of the water carrier at the subsequent position comprises:
calculating a first speed of the water carrier on the first axis based on acceleration data output by the inertial measurement sensor;
determining a second speed of the water carrier on the first axis based on speed data output by the global navigation satellite system;
fusing the first speed and the second speed to obtain the moving speed of the water carrier at the subsequent position.

28. The method of claim 23, wherein the thrust magnitude is positively correlated with the distance error; and/or the thrust magnitude is positively correlated with the speed error.

29. The method of claim 23, wherein the thrust magnitude is determined based on the speed error, the distance error and preset parameters, wherein the preset parameters include at least one of a preset distance parameter or a preset speed parameter.

30. The method of claim 20, wherein controlling the thruster to generate the target thrust comprises:
determining target operating parameters matching the thrust magnitude of the target thrust of a mapping relation between thrust magnitude and operating parameters of the thruster;
controlling the thruster to operate with the target operating parameters so as to generate the target thrust.

31. The method of claim 6, wherein the target thrust has a preset thrust magnitude.

32. The method of claim 31, wherein controlling the thruster to generate the target thrust comprises:
determining target operating parameters matching the preset thrust magnitude of a mapping relation between thrust magnitude and operating parameters of the thruster;
controlling the thruster to operate with the target operating parameters so as to generate the target thrust.

33. The method of claim 6, wherein controlling the thruster to generate the target thrust comprises controlling the thruster to operate with preset operating parameters so as to generate the target thrust.

34. The method of claim 1, wherein the method further comprises controlling the thruster to stop generating thrust when a distance error between the subsequent position of the water carrier and the target position falls within a preset error range.

35. The method of claim 1, wherein the method is executed when movable components of an operating device are inactive, and the operating device is used to manipulate the thruster.

36. The method of claim 35, wherein the method is executed when the thruster does not receive a steering instruction sent by the operating device.

37. The method of claim 35, wherein the method is executed when the thruster does not receive a throttle instruction sent by the operating device.

38. The method of claim 1, wherein the method further comprises:
during the thruster's execution of position maintenance control, if the thruster receives a movement instruction sent by an operating device for moving the water carrier, continuing to perform the position maintenance control after the thruster executes the movement instruction and the water carrier meets a state maintenance condition, wherein the operating device is configured to manipulate the thruster.

39. The method of claim 38, wherein the state maintenance condition includes that a deviation value of a post-movement position of the water carrier relative to the target position is smaller than a first deviation threshold.

40. The method of claim 39, wherein continuing to perform the position maintenance control comprises: updating the water carrier's post-movement position as the target position and continuing the position maintenance control when the deviation value ranges between a second deviation threshold and the first deviation threshold; keeping the original target position unchanged and continuing the position maintenance control when the deviation value is smaller than the second deviation threshold, wherein the second deviation threshold is less than the first deviation threshold.

41. The method of claim 39, wherein the execution of the position maintenance control is terminated when the deviation value reaches the first deviation threshold.

42. The method of claim 1, wherein the method further comprises detecting whether other thrusters in working state exist on the water carrier; if no other working thruster exists, executing the step of calculating the target thrust required by the thruster.

43. A method for maintaining a position of a water carrier based on a single thruster, wherein the method comprises:
in response to a position maintenance instruction, setting a current position of the water carrier as a target position;
acquiring a subsequent position of the water carrier;
calculating an angle error between the subsequent position and the target position;
determining a thrust direction of a target thrust required by the thruster based on the angle error;
controlling the thruster to generate the target thrust directed along the thrust direction so as to maintain the water carrier at the target position.

44. The method of claim 43, wherein the position of the water carrier is acquired via a global navigation satellite system.

45. The method of claim 44, wherein the global navigation satellite system is disposed on the water carrier.

46. The method of claim 44, wherein the global navigation satellite system is disposed on the thruster.

47. The method of claim 46, wherein acquiring the position of the water carrier comprises:
acquiring the position of the thruster and a dimension of the water carrier;
determining the position of the water carrier based on the position of the thruster and the dimension of the water carrier.

48. The method of claim 43, wherein the position of the water carrier is acquired via a global navigation satellite system and an inertial measurement sensor.

49. The method of claim 48, wherein acquiring the position of the water carrier comprises:
acquiring latest position data output by the global navigation satellite system;
calculating a moving distance of the water carrier based on acceleration data output by the inertial measurement sensor, wherein the moving distance is a distance traveled by the water carrier within a time interval from a moment when the global navigation satellite system outputs the latest position data to a current moment;
calculating the position of the water carrier based on the position data and the moving distance.

50. The method of claim 44, wherein acquiring the position of the water carrier comprises:
acquiring latest position data output by the global navigation satellite system;
calculating a moving distance of the water carrier based on a moving speed of the thruster and a heading of the water carrier, wherein the moving distance is a distance traveled by the water carrier within a time interval from a moment when the global navigation satellite system outputs the latest position data to a current moment;
calculating the position of the water carrier based on the position data and the moving distance.

51. The method of claim 43, wherein calculating the angle error between the subsequent position and the target position comprises:
acquiring a distance between the subsequent position and the target position;
acquiring a first projection distance of the distance on a first axis and a second projection distance of the distance on a second axis of the water carrier, wherein the first axis is parallel to a roll axis of the water carrier and perpendicular to the second axis;
calculating the angle error based on the first projection distance and the second projection distance.

52. The method of claim 51, wherein the thruster comprises a steerable member, and determining the thrust direction of the target thrust required by the thruster based on the angle error comprises determining a target steering position of the steerable member based on the angle error.

53. The method of claim 52, wherein the steerable member comprises a propulsion device inside the thruster.

54. The method of claim 52, wherein the thruster comprises a rudder blade and a propulsion device, and the steerable member comprises the rudder blade.

55. The method of claim 52, wherein a steering stroke of the steerable member rotating from a reference position to the target steering position is positively correlated with the angle error, and the reference position refers to a position where an axis of the thrust direction of the thruster passes through a center point of the water carrier.

56. The method of claim 52, wherein the target steering position is determined based on the angle error and a preset steering parameter.

57. The method of claim 43, wherein the method further comprises:
calculating a distance error between the subsequent position and the target position;
calculating a thrust magnitude of the target thrust based on the distance error;
controlling the thruster to generate the target thrust directed along the thrust direction comprises controlling the thruster to generate the target thrust directed along the thrust direction and having the thrust magnitude.

58. The method of claim 57, wherein the thrust magnitude is positively correlated with the distance error.

59. The method of claim 57, wherein the thrust magnitude is determined based on the distance error and a preset distance parameter.

60. The method of claim 57, wherein calculating the thrust magnitude of the target thrust based on the distance error comprises:
acquiring a moving speed of the water carrier at the subsequent position;
calculating a speed error between the moving speed and an expected speed when the water carrier arrives at the target position, wherein the expected speed is less than a speed threshold;
calculating the thrust magnitude of the target thrust based on the distance error and the speed error.

61. The method of claim 60, wherein the moving speed and the expected speed are speeds of the water carrier on a first axis, and the first axis is parallel to a roll axis of the water carrier.

62. The method of claim 61, wherein the moving speed is acquired via an inertial measurement sensor.

63. The method of claim 61, wherein the moving speed is acquired jointly via an inertial measurement sensor and a global navigation satellite system.

64. The method of claim 63, wherein acquiring the moving speed of the water carrier at the subsequent position comprises:
calculating a first speed of the water carrier on the first axis based on acceleration data output by the inertial measurement sensor;
determining a second speed of the water carrier on the first axis based on speed data output by the global navigation satellite system;
fusing the first speed and the second speed to obtain the moving speed of the water carrier at the subsequent position.

65. The method of claim 60, wherein the thrust magnitude is positively correlated with the distance error; and/or the thrust magnitude is positively correlated with the speed error.

66. The method of claim 60, wherein the thrust magnitude is determined based on the speed error, the distance error and preset parameters, wherein the preset parameters include at least one of a preset distance parameter or a preset speed parameter.

67. The method of claim 57, wherein controlling the thruster to generate the target thrust directed along the thrust direction comprises:
determining target operating parameters matching the thrust magnitude of the target thrust of a mapping relation between thrust magnitude and operating parameters of the thruster;
controlling the thruster to operate with the target operating parameters so as to generate the target thrust with the thrust direction and the thrust magnitude matching the target operating parameters.

68. The method of claim 43, wherein the target thrust has a preset thrust magnitude.

69. The method of claim 68, wherein controlling the thruster to generate the target thrust directed along the thrust direction comprises:
determining target operating parameters matching the preset thrust magnitude of a mapping relation between thrust magnitude and operating parameters of the thruster;
controlling the thruster to operate with the target operating parameters so as to generate the target thrust directed along the thrust direction and having the preset thrust magnitude.

70. The method of claim 43, wherein controlling the thruster to generate the target thrust directed along the thrust direction comprises controlling the thruster to operate with preset operating parameters so as to generate the target thrust along the thrust direction.

71. The method of claim 43, wherein the method further comprises controlling the thruster to stop generating thrust when a distance error between the subsequent position of the water carrier and the target position falls within a preset error range.

72. The method of claim 43, wherein the method is executed when movable components of an operating device are inactive, and the operating device is used to manipulate the thruster.

73. The method of claim 72, wherein the method is executed when the thruster does not receive a steering instruction sent by the operating device.

74. The method of claim 72, wherein the method is executed when the thruster does not receive a throttle instruction sent by the operating device.

75. The method of claim 43, wherein the method further comprises: during the thruster's execution of position maintenance control, if the thruster receives a movement instruction sent by the operating device for moving the water carrier, continuing to perform the position maintenance control after the thruster executes the movement instruction and the water carrier meets a state maintenance condition, wherein the operating device is configured to manipulate the thruster.

76. The method of claim 75, wherein the state maintenance condition includes that a deviation value of the water carrier's post-movement position relative to the target position is smaller than a first deviation threshold.

77. The method of claim 76, wherein continuing to perform the position maintenance control comprises: updating the water carrier's post-movement position as the target position and continuing the position maintenance control when the deviation value ranges between a second deviation threshold and the first deviation threshold; keeping the original target position unchanged and continuing the position maintenance control when the deviation value is smaller than the second deviation threshold, wherein the second deviation threshold is less than the first deviation threshold.

78. The method of claim 76, wherein the execution of the position maintenance control is terminated when the deviation value reaches the first deviation threshold.

79. The method of claim 43, wherein the method further comprises detecting whether other thrusters in working state exist on the water carrier; if no other working thruster exists, executing the step of calculating the target thrust required by the thruster.

80. A computer-readable storage medium, wherein computer instructions are stored thereon, and the computer instructions, when executed by a processor, implement the method of any one of claims 1 to 79.

81. A thruster, comprising: a propulsion device and a processor; the processor is electrically connected to the propulsion device, and the processor is configured to execute the method of any one of claims 1 to 79.

82. A movable waterborne device, **characterized by** comprising a water carrier and the thruster of claim 81, wherein the thruster is mounted on the water carrier.
